# EUROPEAN PATENT SPECIFICATION

(11) **EP 4 292 851 B1**
(45) Date of publication and mention of the grant of the patent: **05.03.2025**
(21) Application number: 22179196.5
(22) Date of filing: 15.06.2022
(51) Int. Cl.: B60K 11/02, B60H 1/00, B60K 1/00

(54) **FUEL CELL VEHICLE AND METHOD FOR THERMAL MANAGEMENT**
BRENNSTOFFZELLENFAHRZEUG UND VERFAHREN ZUR THERMISCHEN VERWALTUNG
VÉHICULE À PILE À COMBUSTIBLE ET PROCÉDÉ DE GESTION THERMIQUE

(43) Date of publication of application: 20.12.2023
(73) Proprietor: AVL List GmbH, 8020 Graz (AT)
(72) Inventor: Antonache, Lucian, Basildon (GB); Fliscu, Catalin, Coventry (GB); Varnavides, Alexander, Basildon (GB)
(74) Representative: Gamper, Bettina

(56) References cited:
- CN-A- 114 604 056
- DE-A1- 102009 036 456
- US-A1- 2016 107 504

## Description

The present application relates to a fuel cell vehicle cell vehicle comprising a fuel cell unit, an electric drive unit, a thermal circuit and a fuel cell vehicle thermal system for thermal management of heat exchanged between an electrochemical fuel cell unit, the electric drive unit and the thermal circuit, the thermal circuit, and a method for thermal management using the fuel cell vehicle thermal system.

### Technical field of the invention

The fuel cell vehicle according to the invention belongs to the technical field of liquid cooling of a power train of a fuel cell electric vehicle (FCEV). More specific, the invention is made for onboard thermal management by controlled liquid cooling and dedicated thermal conditioning of different components having different operation temperature ranges within a thermal circuit.

### Background of the invention

The use of hydrogen as a solution for renewable energy storage has attracted enormous attention in striving for decarbonization and global climate goals. High efforts of engineering have since been invested in developing fuel cell power systems for mobile applications appearing as a key technology for the transportation sector while promising long range energy storage and zero emissions power generation.

One of these engineering efforts is to improve overall energy efficiency of fuel cell vehicles and one aspect hereto is the thermal management of the complex drive train of fuel cell vehicles to keep all components as quick and as long as possible on ideal operation temperatures for securing best efficiency and a long life span.

Another particularity of the liquid cooling of fuel cells is a requirement of electrical insulation in terms of liquid flowing through a fuel cell stack. In order to avoid short circuits or other failures, special dielectric coolants are necessary which usually have drawbacks in terms of specific heat capacity or temperature dependent viscosity compared to water and glycol based coolants and imposing higher costs. The same applies likewise for oil based coolants required for power electronics and electric motors due to operation temperatures above boiling temperature of water based coolants.

As another aspect the evolution of correspondingly complex liquid cooling systems for dealing with the demands of all components of fuel cell vehicles has led to an increased number of radiators to be exposed within an aerodynamic drag zone of a vehicle front. A resulting increase of radiator area of an arrangement side by side, or a reduced through flow across radiators arranged one after another is, however, detrimental to the drag properties of the vehicle design, thus impairing overall fuel efficiency.

Hence, in view of the complexity of liquid cooling of a fuel cell vehicle drive train, there is a need for improvements to different selected challenging aspects in the state of art when striving for more efficiency in the thermal management of a fuel cell vehicle.

US 2016/107504 A1 discloses a vehicle including a thermal system, a battery unit and an electric drive.

### Summary of the Invention

It is an object of the invention to overcome the drawbacks of the described challenging aspects in in the state of art of liquid cooling of fuel cell vehicle drive trains. It is another object of the invention to design an architecture of a cooling circuit providing faster thermal response to changes of specific operation or external conditions. It is a further object of the invention to design a thermal management providing more flexibility and improved efficiency by dedicated operation modes for specific of operation or external conditions.

The object is solved by a fuel cell vehicle thermal management system having the features of claim 1, wherein advantages of the system are best exploited when further performing methods of thermal management as defined in the dependent claims to be executed on the fuel cell vehicle thermal management system according to the invention. Further features and details of the invention result from the dependent claims, the specification, and the drawings.

The fuel cell vehicle according to the invention is for thermal management of heat exchanged between an electrochemical fuel cell unit, an electric drive unit of a fuel cell vehicle and a thermal circuit of the fuel cell vehicle thermal system. The thermal circuit comprises a fuel cell thermal loop having a pump for circulating a fuel cell coolant between a thermal fuel cell section for thermal conditioning of the fuel cell unit and a fuel cell heat exchanger; and a drive thermal loop having a pump for circulating a drive coolant between a thermal drive section for thermal conditioning of the electric drive unit and a drive heat exchanger.

In accordance with the invention, the thermal circuit further comprises an ambient thermal loop having a pump for circulating an ambient coolant between at least the fuel cell heat exchanger, the drive heat exchanger and an ambient heat exchanger. In said system context, the fuel cell heat exchanger is a liquid to liquid heat exchanger arranged between the fuel cell thermal loop and the ambient thermal loop for exchanging heat between the fuel cell coolant and the ambient coolant; the drive heat exchanger is a liquid to liquid heat exchanger arranged between the drive thermal loop and the ambient thermal loop for exchanging heat between the drive coolant and the ambient coolant; and the ambient heat exchanger is a liquid to air heat exchanger arranged between the ambient thermal loop and an ambient air for exchanging heat between the ambient coolant and the ambient air.

Hence, for the first time, the invention provides an hierarchical architecture of a thermal circuit in a fuel cell vehicle having one "backbone" cooling stage (i.e. the ambient thermal loop) and different dedicated cooling stages (i.e. the fuel cell thermal loop, drive thermal loop). Under normal driving operation, such backbone cooling stage is a sole cooling provider of primary cooling power having low temperature with respect to the ambient provided to the subservient dedicated cooling stages. The different dedicated cooling stages take off primary cooling power from the backbone cooling stage for the demand of dedicated secondary cooling power having higher temperatures depending on the respective cooling demand of components to be cooled.

The primary cooling power can be continuously received by a dedicated cooling stage, or particularly obtained as needed for secondary cooling power demand of a respective component in the dedicated cooling stage. A requesting and receiving of secondary cooling power from primary cooling power is realized by means of a liquid to liquid heat exchanger for each dedicated cooling stage, and based on flow rates and temperatures of respective coolants passing through a primary side and a secondary side of the liquid to liquid heat exchanger.

Alternatively, in conditions where no cooling, but warming or thermal conditioning of components is required, the architecture of thermal circuit and thermal interfaces may also provide heat among the different dedicated cooling stages and backbone cooling stage and vice versa.

In more adequate terms, said backbone cooling stage and dedicated cooling stages rather serve and should be determined as a backbone thermal conditioning stage and dedicated thermal conditioning stages, respectively. By thermally linking such different dedicated thermal conditioning stages of each component of the drive train, said backbone thermal conditioning stage enables to distribute heat released by a component (e.g. fuel cell unit) from one dedicated thermal conditioning stage (e.g. fuel cell thermal loop) across the thermal circuit to another dedicated thermal conditioning stage (e.g. electric drive thermal loop) for thermally preconditioning or tempering a respective component and prolonging its operation time period within a temperature range of best energy efficiency and durability.

As an advantage, in the architecture of thermal circuit, a cooling or thermal loop for a fuel cell stack can be kept reduced in size and local to the fuel cell stack, hence diminishing cost and risk of contamination of the fuel cell stack. Compared to the state of art, a high amount of specialized cooling fluid for fuel cell stacks (i.e. nonconductive for electricity), a dedicated radiator and hoses with need for insolating the fluid from other circuits and preventing ion contamination, can be reduced or omitted.

As another advantage, the dedicated thermal loops for the battery and the electric drive unit can contain coolants cost effectively and readily available based on internal combustion engine related automotive supply, with no particular requirements outside the typical corrosion.

Furthermore, as an advantage, said "backbone" cooling loop contains regular low cost water and glycol coolant of high specific heat capacity and it can branch across the vehicle as required to move the heat flux from power components to the on single air to liquid front radiator (i.e. the ambient thermal loop heat exchanger).

A particular advantage is a fast thermal response to the different needs in dedicated thermal conditioning of components due to the separated and accordingly smaller coolant volumes of dedicated thermal loops and the plurality of possible heat exchanges among them based on the architecture of thermal circuit.

As a further advantage, the modular structure of the architecture allows to extend the thermal circuit at one or more stages, more particular, it enables to integrated other thermal circuits like the thermal circuit of an air conditioning for using potential syner-gies in different thermal stages under specific conditions.

Moreover, as an advantage of efficiency in thermal management and fuel economy, residual fuel cell stack heat is structurally enabled to be used for other purposes like battery heating or heating of oil based coolant in the electric drive unit during cold start warm up phase, or even cabin heating. Hence, compared to some thermal circuits in the state of art, the architecture of thermal circuit structurally enables to prevent rejection of excess heat of the fuel cell unit to the ambient, so that heat can be directed to useful purposes.

A preferred embodiment of the invention further provides thermal management of a battery unit of fuel cell vehicle; wherein the thermal circuit further comprises: a battery thermal loop having a pump for circulating a battery coolant between a thermal battery section for thermal conditioning of the battery unit and a battery heat exchanger, wherein the battery heat exchanger is a liquid to liquid heat exchanger arranged between the battery thermal loop and the fuel cell thermal loop for exchanging heat between the battery coolant and the fuel cell coolant.

An even more elaborated embodiment of the invention also provides thermal management of a cabin of the fuel cell vehicle, wherein the thermal circuit further comprises: a refrigerant cooling loop having a compressor for circulating a refrigerant fluid between a condenser means for condensing the refrigerant fluid and at least one expansion means for expanding the refrigerant fluid, wherein the at least one expansion means is thermally connected to at least one refrigerant heat exchanger including: a first refrigerant heat exchanger being a liquid to air heat exchanger arranged between the refrigerant cooling loop and a cabin of the fuel cell vehicle for exchanging heat between the refrigerant fluid and cabin air.

In an advantageous embodiment of the invention, the at least one refrigerant heat exchanger further includes: a second refrigerant heat exchanger being a liquid to liquid heat exchanger arranged between the refrigerant cooling loop and the fuel cell thermal loop for exchanging heat between the refrigerant fluid and the fuel cell coolant; and/or a third refrigerant heat exchanger being a liquid to liquid heat exchanger arranged between the refrigerant cooling loop and the battery thermal loop for exchanging heat between the refrigerant fluid and the battery coolant.

In a preferred embodiment of the invention, the condenser means in the refrigerant cooling loop is thermally connected to a condenser heat exchanger being a liquid to liquid heat exchanger arranged between the condenser means and the ambient thermal loop for exchanging heat between the refrigerant fluid and the ambient coolant.

In an alternative embodiment of the invention, the condenser means in the refrigerant cooling loop is thermally connected to a condenser heat exchanger being a liquid to air heat exchanger arranged between the condenser means and the ambient air for exchanging heat between the refrigerant fluid and the ambient air.

In an advantageous embodiment of the invention with respect to flow controlling, the ambient thermal loop, the fuel cell thermal loop and/or the drive thermal loop having a bypass and a bypass valve for bypassing the ambient heat exchanger, the fuel cell heat exchanger and/or the drive heat exchanger, respectively, wherein the battery thermal loop having a diverter valve for switching a flow to either the battery heat exchanger or the third refrigerant heat exchanger.

According to an embodiment of the invention, the fuel cell thermal loop comprises a PTC heater means for heating the fuel cell coolant.

According to a preferred embodiment of the invention, the fuel cell vehicle thermal management system further comprises a control unit connected to control each of the pumps, the compressor and the bypass valves in the fuel cell thermal loop, the drive thermal loop, the ambient thermal loop, the battery thermal loop and /or the refrigerant cooling loop; wherein the control unit is configured to control a circulation of each of the fuel cell coolant, the drive coolant, the ambient coolant, the battery coolant and the refrigerant fluid by setting of each of the pumps, the compressor and the bypass valves.

According to an aspect of the invention, a method to be executed on the fuel cell vehicle thermal management system provides a cold operation mode for a cold start condition of the fuel cell vehicle and/or cold environmental temperature. The method comprises the steps of: circulating the fuel cell coolant to pass through the fuel cell heat exchanger in the fuel cell thermal loop; circulating the drive heat coolant to pass through the drive heat exchanger in the drive thermal loop; and optionally circulating the battery coolant to pass through the battery heat exchanger; and circulating the ambient coolant while bypassing the ambient heat exchanger in the ambient thermal loop. Based on these steps, the method distributes heat released by the fuel cell, and optionally released by the PTC heater means, to the drive thermal loop and/or battery thermal loop via the ambient thermal loop.

According to another aspect of the invention, a method to be executed on the fuel cell vehicle thermal management system provides a normal operation mode for normal driving condition of the fuel cell vehicle. The method comprises the steps of: circulating the fuel cell coolant to pass through the fuel cell heat exchanger in the fuel cell thermal loop; and circulating the drive coolant to pass through the drive heat exchanger in the drive thermal loop; and optionally circulating the battery coolant to pass through the battery heat exchanger in the battery thermal loop; and circulating the ambient coolant to pass through the ambient heat exchanger in the ambient thermal loop. Based on these steps, the method dissipates heat released by the fuel cell and the drive unit and/or the battery to the ambient air by the ambient thermal loop.

According to another aspect of the invention, a method to be executed on the fuel cell vehicle thermal management system provides a high load operation mode for uphill driving condition of the fuel cell vehicle and/or hot environmental temperature. The method comprises the steps of: circulating the refrigerant fluid to pass through the at least one expansion means thermally connected to the second refrigerant heat exchanger in the refrigerant cooling loop; and/or circulating the refrigerant fluid to pass through the at least one expansion means thermally connected to the third refrigerant heat exchanger in the refrigerant cooling loop. Based on these steps, the method additionally dissipates heat released by the fuel cell and the drive unit and/or the battery by the refrigerant cooling loop, at least for a limited time period.

According to a further aspect of the invention, a method to be executed on the fuel cell vehicle thermal management system provides a cold charging operation mode for battery charging in a stationary condition of the fuel cell vehicle at cold battery temperature. The method comprises the steps of: circulating the fuel cell coolant to pass through the fuel cell heat exchanger in the fuel cell thermal loop; and circulating the battery coolant to pass through the battery heat exchanger in the battery thermal loop. Based on these steps, the method warms the battery thermal loop by heat released by the fuel cell and/or the PTC heater means.

According to an alternative aspect of the invention, a method to be executed on the fuel cell vehicle thermal management system provides a hot charging operation mode for battery charging in stationary condition of the fuel cell vehicle at hot battery temperature. The method comprises the steps of: " prohibiting circulation of the battery coolant through the battery heat exchanger in the battery thermal loop by means of the diverter valve in the battery thermal loop; and circulating the refrigerant fluid to pass through the at least one expansion means thermally connected to the third refrigerant heat exchanger in the refrigerant cooling loop. Based on these steps, the method dissipates heat released by the battery charging process by the refrigerant cooling loop.

According to an aspect of the invention, a fuel cell vehicle comprises the ambient air heat exchanger as the only radiator means to be exposed within an aerodynamic drag zone of the fuel cell vehicle.

Features and details described in connection with the claimed fuel cell vehicle thermal management system according to the invention naturally also apply in connection with the claimed methods executed on the fuel cell vehicle thermal management system according to the invention, and vice versa, so that the individual aspects of the invention are or can always be mutually referred to in the disclosure.

Further objectives, advantages, features and applications of the present invention arise from the following description of the exemplary embodiments with reference to the drawings. In the drawing:
- Fig. 1: shows a schematic representation of the thermal circuit of the fuel cell vehicle thermal management system according to an embodiment of the present invention; and
- Fig. 2: shows a schematic representation of the thermal circuit of the fuel cell vehicle thermal management system according to another embodiment of the present invention.

### Detailed description of the Invention

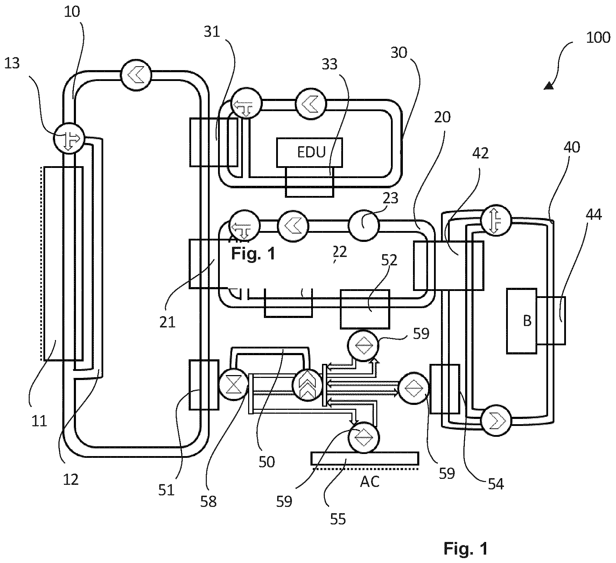

The thermal circuit 100 serves for thermal management in a drive train of a fuel cell vehicle, in particular between a fuel cell unit (FC in Fig. 1) including fuel cell stacks for generating power, an electric drive unit (EDU in Fig. 1) including at least one motor and power electronics like inverters for traction power, a battery unit (B in Fig. 1) for buffering and storing traction energy, and an air conditioning (AC in Fig. 1) for cooling cabin air in a vehicle cabin. Fig. 1 shows a schematic block diagram of a thermal circuit 100 of the fuel cell vehicle thermal system, wherein the thermal circuit is an arrangement of different coolant circuits divided into an ambient thermal loop 10, a fuel cell thermal loop 20, a drive thermal loop 30, a battery thermal loop 40, and a refrigerant cooling loop 50.

The ambient thermal loop 10 conducts an ambient coolant and has a pump for circulating the ambient coolant which is a water and glycol based liquid cooling medium. The ambient thermal loop 10 has an ambient heat exchanger 11 which is a radiator for liquid to gas heat exchanger for exchanging temperature of the ambient coolant, in most cases cooling the ambient coolant, with the temperature of the surrounding ambient air, particularly an airstream during driving of the fuel cell vehicle. However, the ambient heat exchanger 11 can also be bypassed for preventing rejection of heat to the outside of the thermal circuit 100 in terms of a cold start or cold conditions by means of a bypass 12 and a bypass valve 13, the actuation of which can be switched or gradually set between a passing through position and a bypassing position.

The fuel cell thermal loop 20 conducts a fuel cell coolant and has a pump for circulating the fuel cell coolant, which is a dielectric, i.e. electrical non-conductive liquid cooling medium based on e.g. a synthetic oil. The fuel cell unit releases heat during electrochemical power generation and the heat is absorbed by the fuel cell coolant when passing through a thermal fuel cell section 22 which is e.g. a cooling channel of a fuel cell stack having a suitable heat surface area between the fuel cell stack and the fuel cell coolant conducted therethrough. The fuel cell thermal loop 20 has a fuel cell heat exchanger 21 which is a liquid to liquid type heat exchanger, e.g. a plate heat exchanger having two liquid flow paths running therethrough for exchanging temperatures between the fuel cell coolant. The fuel cell thermal loop 20 is thermally linked, particularly thermally connectable with the ambient thermal loop 10 by controlling a volume flow of the fuel cell coolant passing through the fuel cell heat exchanger 21.

The volume flow can be controlled by a pump rotation and a passing through or bypassing of the fuel cell heat exchanger 21 and can be controlled by switching or gradual actuation of a bypass valve in an optional bypass of the fuel cell heat exchanger 21 (not depicted). Moreover, a PTC heater means 23 is optionally arranged within the fuel cell thermal loop 20. The PTC heater means 23 generates electrical heating and enables controlled heat release into the fuel cell coolant for preconditioning or tempering the fuel cell unit in terms of a cold start or cold conditions.

The drive thermal loop 30 conducts a drive coolant and has a pump for circulating the drive coolant which is an oil based coolant having elevated boiling temperatures suitable for the cooling of power electronics. The electric drive unit releases heat when producing traction power and the heat is absorbed by the drive coolant when passing through a thermal drive section 33 which is e.g. a cooling channel in thermal contact with electronics and a motor stator and having a suitable heat exchanging surface area between said components and the drive coolant conducted therethrough. The drive thermal loop 30 has a drive heat exchanger 31 which is a liquid to liquid type heat exchanger, e.g. a plate heat exchanger as previous mentioned. Also, the drive thermal loop 30 is thermally linked, or particularly thermally connectable with the ambient thermal loop 10 by controlling a volume flow of the drive coolant passing through the drive heat exchanger 31. Likewise, the volume flow can be controlled by a pump rotation and a passing through or bypassing of the drive heat exchanger 31 can be controlled by switching or gradual actuation of a bypass valve in an optional bypass of the drive heat exchanger 31 (not depicted).

The battery thermal loop 40 conducts a battery coolant and has a pump for circulating the battery coolant which is preferably an oil based coolant like e.g. a transformer oil. The battery includes several battery cells or battery modules and releases heat when being discharged or charged at elevated power rates. The heat is absorbed by the battery coolant when passing through a thermal battery section 44 which is e.g. a cooling channel in thermal contact with the battery cells or battery modules and having a suitable heat exchanging surface area between said cells or modules and the battery coolant conducted therethrough. The battery thermal loop 40 has a battery heat exchanger 42 which is a liquid to liquid type heat exchanger, e.g. a plate heat exchanger as previous mentioned. In contrast to the fuel cell thermal loop 20 and the drive thermal loop 30, the battery thermal loop 40 is not, at least not directly, thermally linked to the ambient thermal loop 10. Instead, the battery thermal loop 40 is linked, or particularly thermally connectable with the fuel cell thermal loop 20 by controlling a volume flow of the battery coolant passing through the battery heat exchanger 42. The volume flow can again be controlled by a pump rotation in a similar manner as mentioned before.

The refrigerant cooling loop 50 conducts a refrigerant fluid and has a compressor for circulating while condensing the refrigerant fluid in a condenser means 58 and expanding the refrigerant fluid in an expanding means 59. The refrigerant fluid is a liquid and gas phase fluid, the condenser means 58 is a refrigerant liquifying cooling vessel and the expanding means is an expansion valve as known from air conditioning technology. The vehicle cabin can be cooled by absorbing heat from the cabin by the cool refrigerant when passing through the expansion means 59 being in thermal connection with a first refrigerant heat exchanger 55. The first refrigerant heat exchanger 55 is a liquid or fluid to air heat exchanger, i.e. a radiator for cooling an air conditioned air flow to the cabin. The condenser means 58 is thermally connected to a condenser heat exchanger 51 which is a liquid or fluid to liquid heat exchanger linked to the ambient thermal loop 10 for exchanging a temperature, particularly cooling and condensing of the refrigerant fluid with a temperature of the ambient coolant.

The refrigerant cooling loop 50 further has two more expansion means 59 thermally connected, i.e. in thermal contact or in fluid connection with a second heat exchanger 52 and a third refrigerant heat exchanger 54, respectively. Both heat exchangers can be activated or controlled by actuating or gradually setting a respective expansion valve embodying said expansion means 59. In this way, the refrigerant cooling loop 50 is thermally linked, or particularly can be selectively thermally connected with the fuel cell thermal loop 20 via the second heat exchanger 52 being a liquid to liquid type heat exchanger, or linked, particularly selectively thermally connected with the battery thermal loop 40 via the third heat exchanger 54 being a liquid to liquid type heat exchanger of a before mentioned type. The volume flow or cooling power of refrigerant fluid can be controlled by a compressor rotation or pressure and an individual control of expansion valves 59 connected to the first, second and third refrigerant heat exchangers 52, 54, 55, respectively. The battery thermal loop 40 has a controllable diverter valve directing the flow exclusively to the battery heat exchanger 42 or exclusively to the third refrigerant heat exchanger 54, depending on heating or, respectively, cooling requirement of the battery B.

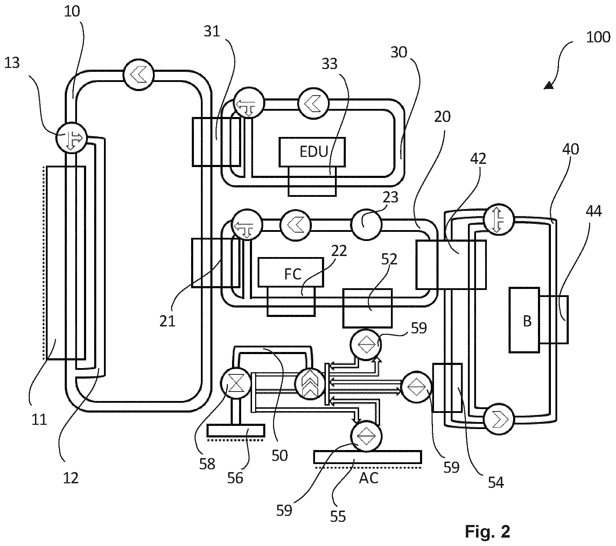

Fig. 2 shows an alternative embodiment of the invention. The embodiment of Fig. 2 deviates from the structure of the thermal circuit 100 as depicted in Fig.1 in that the condenser means 58 in the refrigerant cooling loop 50 is cooled in a different way. A condenser heat exchanger 56 of a liquid to air heat exchanger or alternatively a heat sink having an increased heat exchanging surface area to the surrounding ambient air is arranged to cool the condenser means 58. Particularly in this embodiment, a supporting heat pump function for additional cooling of the fuel cell thermal loop 20 during high load operation, or for additional cooling of the battery thermal loop 40 during battery charging is limited to a maximum time period or maximum power, if the air cooling of the condenser heat exchanger 56 represents a bottle neck of heat flux in terms of said supporting heat pump function.

The fuel cell vehicle thermal management system includes control logics embodied by e.g. a control unit or a dedicated computer program to be performed on a central processing unit (CPU) of the fuel cell vehicle for executing thermal management. The respective control hardware is connected with all pumps and the compressor for controlling each of a circulation of the ambient coolant in the ambient thermal loop 10, circulation of the fuel cell coolant in the fuel cell thermal loop 20, circulation of the drive coolant in the drive coolant loop 30, circulation of the battery coolant in the battery thermal loop 40, and circulation of the refrigerant fluid in the refrigerant cooling loop. Moreover, the respective control hardware is connected to the bypass valve 13 and all other bypass valves in the thermal circuit 100 for controlling a passing through of the ambient coolant through the ambient heat exchanger 11, or bypassing of the same during cold start or cold conditions, and for controlling of each of the other bypasses to other heat exchangers available in the thermal circuit 100.

The fuel cell vehicle thermal management system provides different operation modes by means of its control logic representing control methods of thermal management.

In a cold operation mode, the ambient thermal loop 10 is controlled to bypass the ambient heat exchanger 11, and heat released by the fuel cell, and optionally heat released by the PTC heater means 23 into the fuel cell thermal loop 20 is transferred to the ambient thermal loop 10 via the fuel cell heat exchanger 21. Subsequently, the ambient thermal loop 10 transfers heat received from the fuel cell thermal loop 20 to the drive thermal loop 30 via the drive heat exchanger 31. In this way for example viscosity of the oil based drive coolant can be improved during cold start. Optionally, in cold operating conditions, heat flux from the fuel cell thermal loop 20 can be transferred to the battery thermal loop 40, via the heat exchanger 42. This heat transfer is controlled by the combined action of the pump and the diverter valve in the battery thermal loop 40.

In a normal operation mode, the ambient thermal loop 10 is controlled to pass through the ambient heat exchanger 11 so as to provide cooling power for the rest of the thermal circuit 100 based on the ambient air temperature. The fuel cell thermal loop 20 and the drive thermal loop 30 take cooling power from the ambient thermal loop 10 via the fuel cell heat exchanger 21 and the drive heat exchanger 31 as required on demand of dedicated cooling of the fuel cell unit and electric drive unit, respectively.

In a high load operation mode, the the refrigerant cooling loop 50 is controlled to additionally absorb heat from the fuel cell thermal loop 20 via the second refrigerant heat exchanger 52. In this way, technique comprised by an air conditioning can be used for supporting, at least for a limited time period and limited cooling power, an additional dissipation of heat produced under high load operation. Optionally, in high load operating conditions, the refrigerant cooling loop 50 is controlled to absorb heat from the battery thermal loop 40 via the third refrigerant heat exchanger 54. In this action, the diverter valve in the battery thermal loop 40 diverts flow to the third refrigerant heat exchanger 54 and entirely bypasses the battery heat exchanger 42. The pump in the battery thermal loop 40 ensures coolant flow.

The battery can be charged by the fuel cell unit or an external charging means in case of low state of charge (SOC) in a stationary condition of the fuel cell vehicle.

In a cold charging operation mode, heat released by the fuel cell, or optionally heat released by the PTC heater means 23 into the fuel cell thermal loop 20 is transferred to the battery thermal loop 40 via the battery heat exchanger 42. In this way, the battery unit and particularly the electrolyte in the battery cells can be warmed and preconditioned for accepting higher charging power rates and improving durability or a life span of the battery unit under cold start and cold temperature conditions.

In a hot charging operation mode, the refrigerant cooling loop 50 is controlled to adsorb heat released by battery unit during charging into the battery thermal loop 40 via the third refrigerant heat exchanger 54. In this way, technique comprised by the air conditioning can be used for cooling and thermal conditioning of the battery unit, even in a stationary condition without airstream to the ambient heat exchanger 11.

### List of reference characters

- 10: ambient thermal loop
- 11: ambient heat exchanger
- 12: bypass
- 13: bypass valve
- 20: fuel cell thermal loop
- 21: fuel cell heat exchanger
- 22: thermal fuel cell section
- 23: PTC heater means
- 30: drive thermal loop
- 31: drive heat exchanger
- 33: thermal drive section
- 40: battery thermal loop
- 42: battery heat exchanger
- 44: thermal battery section
- 50: refrigerant cooling loop
- 51: condenser heat exchanger
- 52: first refrigerant heat exchanger
- 54: second refrigerant heat exchanger
- 55: first refrigerant heat exchanger
- 56: condenser heat exchanger
- 58: condenser means
- 59: expansion means
- 100: thermal circuit

- AC: air conditioning
- B: battery unit
- EDU: electric drive unit
- FC: fuel cell unit

## Claims

1. Fuel cell vehicle comprising a fuel cell unit, an electric drive unit, a thermal circuit (100) and a fuel cell vehicle thermal system for thermal management of heat exchanged between an electrochemical fuel cell unit, the electric drive unit and the thermal circuit (100), the thermal circuit (100) comprising:
a fuel cell thermal loop (20) having a pump for circulating a fuel cell coolant between a thermal fuel cell section (22) for thermal conditioning of the fuel cell unit and a fuel cell heat exchanger (21); and
a drive thermal loop (30) having a pump for circulating a drive coolant between a thermal drive section (33) for thermal conditioning of the electric drive unit and a drive heat exchanger (31);
**characterized by** further comprising
an ambient thermal loop (10) having a pump for circulating an ambient coolant between at least the fuel cell heat exchanger (21), the drive heat exchanger (31) and an ambient heat exchanger (11); wherein
the fuel cell heat exchanger (21) is a liquid to liquid heat exchanger arranged between the fuel cell thermal loop (20) and the ambient thermal loop (10) for exchanging heat between the fuel cell coolant and the ambient coolant;
the drive heat exchanger (31) is a liquid to liquid heat exchanger arranged between the drive thermal loop (30) and the ambient thermal loop (10) for exchanging heat between the drive coolant and the ambient coolant; and
the ambient heat exchanger (11) is a liquid to air heat exchanger arranged between the ambient thermal loop (10) and an ambient air for exchanging heat between the ambient coolant and the ambient air.

2. Fuel cell vehicle according to claim 1, wherein the thermal circuit (100) further comprises:
a battery thermal loop (40) having a pump for circulating a battery coolant between a thermal battery section (44) for thermal conditioning of the battery unit and a battery heat exchanger (42), wherein
the battery heat exchanger (42) is a liquid to liquid heat exchanger arranged between the battery thermal loop (40) and the fuel cell thermal loop (20) for exchanging heat between the battery coolant and the fuel cell coolant.

3. Fuel cell vehicle according to claim 1 or 2, wherein the thermal circuit (100) further comprises:
a refrigerant cooling loop (50) having a compressor for circulating a refrigerant fluid between a condenser means (58) for condensing the refrigerant fluid and at least one expansion means (59) for expanding the refrigerant fluid, wherein the at least one expansion means (59) is thermally connected to at least one refrigerant heat exchanger (52, 54, 55) including:
a first refrigerant heat exchanger (55) being a liquid to air heat exchanger arranged between the refrigerant cooling loop (50) and a cabin of the fuel cell vehicle for exchanging heat between the refrigerant fluid and cabin air.

4. Fuel cell vehicle according to claim 3, wherein the at least one refrigerant heat exchanger (52, 54, 55) further includes:
a second refrigerant heat exchanger (52) being a liquid to liquid heat exchanger arranged between the refrigerant cooling loop (50) and the fuel cell thermal loop (20) for exchanging heat between the refrigerant fluid and the fuel cell coolant; and/or
a third refrigerant heat exchanger (54) being a liquid to liquid heat exchanger arranged between the refrigerant cooling loop (50) and the battery thermal loop (40) for exchanging heat between the refrigerant fluid and the battery coolant.

5. Fuel cell vehicle according to claim 3 or 4, wherein the condenser means (58) is thermally connected to a condenser heat exchanger (51) being a liquid to liquid heat exchanger arranged between the condenser means (58) and the ambient thermal loop (10) for exchanging heat between the refrigerant fluid and the ambient coolant

6. Fuel cell vehicle according to claim 3 or 4, wherein the condenser means (58) is thermally connected to a condenser heat exchanger (56) being a liquid to air heat exchanger arranged between the condenser means (58) and the ambient air for exchanging heat between the refrigerant fluid and the ambient air.

7. Fuel cell vehicle according to any of the preceding claims, wherein the ambient thermal loop (10), the fuel cell thermal loop (20) and/or the drive thermal loop (30) having a bypass and a bypass valve for bypassing the ambient heat exchanger (11), the fuel cell heat exchanger (21) and/or the drive heat exchanger (31), respectively, wherein the battery thermal loop (40) having a diverter valve for switching a flow to either the battery heat exchanger (42) or the third refrigerant heat exchanger (54).

8. Fuel cell vehicle according to any of the preceding claims, wherein the fuel cell thermal loop (20) comprises a PTC heater means (23) for heating the fuel cell coolant.

9. The fuel cell vehicle according to claim 7 or 8, further comprising a control unit connected to control each of the pumps, the compressor and the bypass valves in the fuel cell thermal loop (20), the drive thermal loop (30), the ambient thermal loop (10), the battery thermal loop (40) and /or the refrigerant cooling loop (50); wherein
the control unit is configured to control a circulation of each of the fuel cell coolant, the drive coolant, the ambient coolant, the battery coolant and the refrigerant fluid by setting of each of the pumps, the compressor and the bypass valves.

10. Method for thermal management in a fuel cell vehicle according to any of claims 1 to 9, wherein the method provides a cold operation mode for a cold start condition of the fuel cell vehicle and/or cold environmental temperature, comprising the steps of:
circulating the fuel cell coolant to pass through the fuel cell heat exchanger (21) in the fuel cell thermal loop (20);
circulating the drive heat coolant to pass through the drive heat exchanger (31) in the drive thermal loop (30); and optionally
circulating the battery coolant to pass through the battery heat exchanger (42); and
circulating the ambient coolant while bypassing the ambient heat exchanger (11) in the ambient thermal loop (10);
for distributing heat released by the fuel cell, and optionally heat released by the PTC heater means (23), to the drive thermal loop (30) and/or battery thermal loop (40) via the ambient thermal loop (10).

11. Method for thermal management in a fuel cell vehicle according to any of claims 1 to 9, wherein the method provides a normal operation mode for normal driving condition of the fuel cell vehicle, wherein in the normal operation mode, comprising the steps of:
circulating the fuel cell coolant to pass through the fuel cell heat exchanger (21) in the fuel cell thermal loop (20); and
circulating the drive coolant to pass through the drive heat exchanger (31) in the drive thermal loop (30); and optionally
circulating the battery coolant to pass through the battery heat exchanger (42) in the battery thermal loop (40); and
circulating the ambient coolant to pass through the ambient heat exchanger (11) in the ambient thermal loop (10);
for dissipating heat released by the fuel cell and the drive unit and/or the battery to the ambient air by the ambient thermal loop (10).

12. Method for thermal management in a fuel cell vehicle according to any of claims 1 to 9, wherein the method provides a high load operation mode for uphill driving condition of the fuel cell vehicle and/or hot environmental temperature, comprising the steps of:
circulating the refrigerant fluid to pass through the at least one expansion means (59) thermally connected to the second refrigerant heat exchanger (52) in the refrigerant cooling loop (50); and/or
circulating the refrigerant fluid to pass through the at least one expansion means (59) thermally connected to the third refrigerant heat exchanger (54) in the refrigerant cooling loop (50);
for additionally dissipating heat released by the fuel cell and the drive unit and/or the battery by the refrigerant cooling loop (50), at least for a limited time period.

13. Method for thermal management in a fuel cell vehicle according to any of claims 1 to 9, wherein the method provides a cold charging operation mode for battery charging in a stationary condition of the fuel cell vehicle at cold battery temperature, comprising the steps of:
circulating the fuel cell coolant to pass through the fuel cell heat exchanger (21) in the fuel cell thermal loop (20); and
circulating the battery coolant to pass through the battery heat exchanger (42) in the battery thermal loop (40);
for warming the battery thermal loop (40) by heat released by the fuel cell and/or the PTC heater means (23).

14. Fuel cell vehicle according to claim 9, wherein the control unit further provides a hot charging operation mode for battery charging in stationary condition of the fuel cell vehicle at hot battery temperature, comprising the steps of:
prohibiting circulation of the battery coolant through the battery heat exchanger (42) in the battery thermal loop (40) by means of a diverter valve in the battery thermal loop (40); and
circulating the refrigerant fluid to pass through the at least one expansion means (59) thermally connected to the third refrigerant heat exchanger (54) in the refrigerant cooling loop (50);
for dissipating heat released by the battery charging process by the refrigerant cooling loop (50).

15. Fuel cell vehicle according to any of claims 1 to 9, **characterized by** comprising the ambient heat exchanger (11) as the only radiator means to be exposed within an aerodynamic drag zone of the fuel cell vehicle.

## Patentansprüche

1. Brennstoffzellenfahrzeug mit einer Brennstoffzelleneinheit, einer elektrischen Antriebseinheit, einem Wärmekreislauf (100) und einem Brennstoffzellenfahrzeug-Wärmesystem für das Wärmemanagement von einem Wärmeaustausch zwischen einer elektrochemischen Brennstoffzelleneinheit, der elektrischen Antriebseinheit und dem thermischen Kreislauf (100), wobei der thermische Kreislauf (100) umfasst:
einen thermischen Brennstoffzellenkreislauf (20) mit einer Pumpe zum Zirkulieren eines Brennstoffzellenkühlmittels zwischen einem thermischen Brennstoffzellenabschnitt (22) zur thermischen Konditionierung der Brennstoffzelleneinheit und einem Brennstoffzellenwärmetauscher (21); und
einen thermischen Antriebskreislauf (30) mit einer Pumpe zum Zirkulieren eines Antriebskühlmittels zwischen einem thermischen Antriebsabschnitt (33) zur thermischen Konditionierung der elektrischen Antriebseinheit und einem Antriebswärmetauscher (31);
**dadurch gekennzeichnet, dass** der thermische Kreislauf (100) ferner umfasst
einen Umgebungswärmekreislauf (10) mit einer Pumpe zum Zirkulieren eines Umgebungskühlmittels zwischen mindestens dem Brennstoffzellenwärmetauscher (21), dem Antriebswärmetauscher (31) und einem Umgebungswärmetauscher (11); wobei
der Brennstoffzellenwärmetauscher (21) ein Flüssigkeit-zu-Flüssigkeit-Wärmetauscher ist, der zwischen dem thermischen Kreislauf der Brennstoffzelle (20) und dem thermischen Kreislauf der Umgebung (10) angeordnet ist, um Wärme zwischen dem Kühlmittel der Brennstoffzelle und dem Kühlmittel der Umgebung auszutauschen;
der Antriebswärmetauscher (31) ein Flüssigkeit-zu-Flüssigkeit-Wärmetauscher ist, der zwischen dem Antriebswärmekreislauf (30) und dem Umgebungswärmekreislauf (10) angeordnet ist, um Wärme zwischen dem Antriebskühlmittel und dem Umgebungskühlmittel auszutauschen; und
der Umgebungswärmetauscher (11) ein Flüssigkeit-Luft-Wärmetauscher ist, der zwischen dem thermischen Umgebungskreislauf (10) und der Umgebungsluft angeordnet ist, um Wärme zwischen dem Umgebungskühlmittel und der Umgebungsluft auszutauschen.

2. Brennstoffzellenfahrzeug nach Anspruch 1, wobei der thermische Kreislauf (100) weiterhin umfasst:
einen thermischen Batteriekreislauf (40) mit einer Pumpe zum Zirkulieren eines Batteriekühlmittels zwischen einem thermischen Batterieabschnitt (44) zur thermischen Konditionierung der Batterieeinheit und einem Batteriewärmetauscher (42), wobei der Batteriewärmetauscher (42) ein Flüssigkeit-zu-Flüssigkeit-Wärmetauscher ist, der zwischen dem thermischen Batteriekreislauf (40) und dem thermischen Brennstoffzellenkreislauf (20) angeordnet ist, um Wärme zwischen dem Batteriekühlmittel und dem Brennstoffzellenkühlmittel auszutauschen.

3. Brennstoffzellenfahrzeug nach Anspruch 1 oder 2, wobei der thermische Kreislauf (100) weiterhin umfasst:
einen Kältemittelkühlkreislauf (50) mit einem Kompressor zum Zirkulieren eines Kältemittelfluids zwischen einem Kondensatormittel (58) zum Kondensieren des Kältemittelfluids und mindestens einem Expansionsmittel (59) zum Expandieren des Kältemittelfluids, wobei das mindestens eine Expansionsmittel (59) thermisch mit mindestens einem Kältemittelwärmetauscher (52, 54, 55) verbunden ist, der folgendes umfasst:
einen ersten Kältemittel-Wärmetauscher (55), der ein Flüssigkeit-Luft-Wärmetauscher ist, der zwischen dem Kältemittel-Kühlkreislauf (50) und einer Kabine des Brennstoffzellenfahrzeugs angeordnet ist, um Wärme zwischen dem Kältemittelfluid und der Kabinenluft auszutauschen.

4. Brennstoffzellenfahrzeug nach Anspruch 3, wobei der mindestens eine Kältemittel-Wärmetauscher (52, 54, 55) ferner umfasst:
einen zweiten Kältemittel-Wärmetauscher (52), der ein Flüssigkeit-zu-Flüssigkeit-Wärmetauscher ist und zwischen dem Kältemittel-Kühlkreislauf (50) und dem Brennstoffzellen-Wärmekreislauf (20) angeordnet ist, um Wärme zwischen dem Kältemittelfluid und dem Brennstoffzellen-Kühlmittel auszutauschen;
und/oder
einen dritten Kältemittel-Wärmetauscher (54), der ein Flüssigkeit-zu-Flüssigkeit-Wärmetauscher ist und zwischen dem Kältemittel-Kühlkreislauf (50) und dem Batterie-Wärmekreislauf (40) angeordnet ist, um Wärme zwischen dem Kältemittel und dem Batterie-Kühlmittel auszutauschen.

5. Brennstoffzellenfahrzeug nach Anspruch 3 oder 4, wobei das Kondensatormittel (58) thermisch mit einem Kondensatorwärmetauscher (51) verbunden ist, der ein Flüssigkeit-zu-Flüssigkeit-Wärmetauscher ist, der zwischen dem Kondensatormittel (58) und dem Umgebungswärmekreislauf (10) zum Austausch von Wärme zwischen dem Kühlfluid und dem Umgebungskühlmittel angeordnet ist.

6. Brennstoffzellenfahrzeug nach Anspruch 3 oder 4, wobei die Kondensatoreinrichtung (58) thermisch mit einem Kondensatorwärmetauscher (56) verbunden ist, der ein Flüssigkeit-Luft-Wärmetauscher ist, der zwischen der Kondensatoreinrichtung (58) und der Umgebungsluft angeordnet ist, um Wärme zwischen dem Kühlmittel und der Umgebungsluft auszutauschen.

7. Brennstoffzellenfahrzeug nach einem der vorhergehenden Ansprüche, wobei der Umgebungswärmekreislauf (10), der Brennstoffzellenwärmekreislauf (20) und/oder der Antriebswärmekreislauf (30) einen Bypass und ein Bypass-Ventil zum Umgehen des Umgebungswärmetauschers (11), des Brennstoffzellenwärmetauschers (21) und/oder des Antriebswärmetauschers (31) aufweisen, wobei der Batteriewärmekreislauf (40) ein Umschaltventil zum Umschalten eines Flusses entweder zum Batteriewärmetauscher (42) oder zum dritten Kältemittelwärmetauscher (54) aufweist.

8. Brennstoffzellenfahrzeug nach einem der vorhergehenden Ansprüche, wobei der Brennstoffzellen-Wärmekreislauf (20) eine PTC-Heizeinrichtung (23) zur Erwärmung des Brennstoffzellen-Kühlmittels umfasst.

9. Brennstoffzellenfahrzeug nach Anspruch 7 oder 8, das ferner eine Steuereinheit umfasst, die so angeschlossen ist, dass sie jede der Pumpen, den Kompressor und die Bypass-Ventile in dem Brennstoffzellen-Wärmekreislauf (20), dem Antriebs-Wärmekreislauf (30), dem Umgebungs-Wärmekreislauf (10), dem Batterie-Wärmekreislauf (40) und/oder dem Kühlmittel-Kühlkreislauf (50) steuert; wobei die Steuereinheit so konfiguriert ist, dass sie eine Zirkulation des Brennstoffzellen-Kühlmittels, des Antriebs-Kühlmittels, des UmgebungsKühlmittels, des Batterie-Kühlmittels und des Kältemittel-Fluids durch Einstellen jeder der Pumpen, des Kompressors und der Bypass-Ventile steuert.

10. Verfahren zum Wärmemanagement in einem Brennstoffzellenfahrzeug nach einem der Ansprüche 1 bis 9, wobei das Verfahren einen Kaltbetriebsmodus für einen Kaltstartzustand des Brennstoffzellenfahrzeugs und/oder eine kalte Umgebungstemperatur bereitstellt, umfassend die Schritte:
Zirkulieren des Brennstoffzellen-Kühlmittels durch den Brennstoffzellen-Wärmetauscher (21) im thermischen Kreislauf der Brennstoffzelle (20);
Zirkulieren des Antriebswärme-Kühlmittels, um es durch den Antriebswärmetauscher (31) im Antriebswärmekreislauf (30) zu leiten; und optional
Zirkulieren des Batteriekühlmittels, um es durch den Batteriewärmetauscher (42) zu leiten; und
Zirkulieren des Umgebungskühlmittels unter Umgehung des Umgebungswärmetauschers (11) im Umgebungswärmekreislauf (10);
zum Verteilen der von der Brennstoffzelle abgegebenen Wärme und optional der vom PTC-Heizmittel (23) abgegebenen Wärme an den Antriebswärmekreislauf (30) und/oder den Batterie-Wärmekreislauf (40) über den umgebenden Wärmekreislauf (10).

11. Verfahren zum Wärmemanagement in einem Brennstoffzellenfahrzeug nach einem der Ansprüche 1 bis 9, wobei das Verfahren einen normalen Betriebsmodus für normale Fahrbedingungen des Brennstoffzellenfahrzeugs bereitstellt, wobei es im normalen Betriebsmodus die folgenden Schritte umfasst:
Zirkulieren des Brennstoffzellen-Kühlmittels, um es durch den Brennstoffzellen-Wärmetauscher (21) im Brennstoffzellen-Wärmekreislauf (20) zu leiten; und
Zirkulieren des Antriebskühlmittels, um es durch den Antriebswärmetauscher (31) in dem Antriebswärmekreislauf (30) zu leiten; und optional
Zirkulieren des Batteriekühlmittels, um es durch den Batteriewärmetauscher (42) im Batterie-Wärmekreislauf (40) zu leiten; und
Zirkulieren des Umgebungskühlmittels, um es durch den Umgebungswärmetauscher (11) im Umgebungswärmekreislauf (10) zu leiten;
zur Ableitung der von der Brennstoffzelle und der Antriebseinheit und/oder der Batterie abgegebenen Wärme an die Umgebungsluft über den Umgebungswärmekreislauf (10).

12. Verfahren zum Wärmemanagement in einem Brennstoffzellenfahrzeug nach einem der Ansprüche 1 bis 9, wobei das Verfahren einen Hochlast-Betriebsmodus für den Bergauf-Fahrzustand des Brennstoffzellenfahrzeugs und/oder heiße Umgebungstemperaturen vorsieht, mit den folgenden Schritten:
Zirkulieren des Kältemittels, um es durch das mindestens eine Expansionsmittel (59) zu leiten, das thermisch mit dem zweiten Kältemittel-Wärmetauscher (52) in der Kältemittel-Kühlschleife (50) verbunden ist; und/oder
Zirkulieren des Kältemittels, um es durch das mindestens eine Expansionsmittel (59) zu leiten, das thermisch mit dem dritten Kältemittel-Wärmetauscher (54) in dem Kältemittel-Kühlkreislauf (50) verbunden ist;
zur zusätzlichen Abführung der von der Brennstoffzelle und der Antriebseinheit und/oder der Batterie freigesetzten Wärme durch den Kältemittelkühlkreislauf (50), zumindest für eine begrenzte Zeitspanne.

13. Verfahren für das Wärmemanagement in einem Brennstoffzellenfahrzeug nach einem der Ansprüche 1 bis 9, wobei das Verfahren einen Kaltladebetriebsmodus für das Aufladen der Batterie in einem stationären Zustand des Brennstoffzellenfahrzeugs bei kalter Batterietemperatur bereitstellt, umfassend die Schritte:
Zirkulieren des Brennstoffzellen-Kühlmittels, um es durch den Brennstoffzellen-Wärmetauscher (21) im Brennstoffzellen-Wärmekreislauf (20) zu leiten; und
Zirkulieren des Batteriekühlmittels, um es durch den Batteriewärmetauscher (42) im Batterie-Wärmekreislauf (40) zu leiten;
zur Erwärmung des thermischen Kreislaufs der Batterie (40) durch die von der Brennstoffzelle und/oder der PTC-Heizvorrichtung (23) abgegebene Wärme.

14. Brennstoffzellenfahrzeug nach Anspruch 9, wobei die Steuereinheit ferner einen Heißladebetriebsmodus zum Laden der Batterie im stationären Zustand des Brennstoffzellenfahrzeugs bei heißer Batterietemperatur bereitstellt, der die folgenden Schritte umfasst:
Verhindern der Zirkulation des Batteriekühlmittels durch den Batteriewärmetauscher (42) in der Batteriewärmeschleife (40) mit Hilfe eines Umleitungsventils in der Batteriewärmeschleife (40); und
Zirkulieren des Kältemittels, um es durch das mindestens eine Expansionsmittel (59) zu leiten, das thermisch mit dem dritten Kältemittel-Wärmetauscher (54) in der Kältemittel-Kühlschleife (50) verbunden ist;
zur Ableitung der durch den Ladevorgang der Batterie freigesetzten Wärme durch den Kühlkreislauf (50).

15. Brennstoffzellenfahrzeug nach einem der Ansprüche 1 bis 9, **dadurch gekennzeichnet, dass** der Umgebungsluftwärmetauscher (11) die einzige Kühlereinrichtung ist, die innerhalb einer Luftwiderstandszone des Brennstoffzellenfahrzeugs freiliegt.

## Revendications

1. Véhicule à pile à combustible comprenant une unité de pile à combustible, une unité d'entraînement électrique, un circuit thermique (100) et un système thermique de véhicule à pile à combustible pour la gestion thermique de la chaleur transmise entre une unité de pile à combustible électrochimique, l'unité d'entraînement électrique et le circuit thermique (100), dans lequel le circuit thermique (100) comprend:
un circuit thermique de pile à combustible (20) comprenant une pompe pour faire circuler un réfrigérant de pile à combustible entre une section thermique de pile à combustible (22) pour le conditionnement thermique de l'unité de pile à combustible et un échangeur thermique de pile à combustible (21) ; et
un circuit d'entraînement thermique (30) comprenant une pompe pour faire circuler un réfrigérant d'entraînement entre une section d'entraînement thermique (33) pour le conditionnement thermique de l'unité d'entraînement électrique et un échangeur thermique d'entraînement (31) ;
**caractérisé en ce qu'**il comprend en outre
un circuit de chaleur ambiante (10) comprenant une pompe pour faire circuler un réfrigérant ambiant entre au moins l'échangeur thermique de pile à combustible (21), l'échangeur thermique d'entraînement (31) et un échangeur thermique ambiant (11) ; dans lequel
l'échangeur de chaleur de pile à combustible (21) est un échangeur de chaleur liquide-liquide disposé entre le circuit thermique de la pile à combustible (20) et le circuit thermique de l'environnement (10) pour échanger de la chaleur entre le réfrigérant de la pile à combustible et le réfrigérant de l'environnement ;
l'échangeur de chaleur d'entraînement (31) est un échangeur de chaleur liquide-liquide disposé entre le circuit thermique d'entraînement (30) et le circuit thermique ambiant (10) pour échanger de la chaleur entre le fluide de refroidissement d'entraînement et le fluide de refroidissement ambiant ; et l'échangeur de chaleur ambiant (11) est un échangeur de chaleur liquide-air disposé entre le circuit thermique ambiant (10) et l'air ambiant pour échanger de la chaleur entre le liquide de refroidissement ambiant et l'air ambiant.

2. Véhicule à pile à combustible selon la revendication 1, dans lequel le circuit thermique (100) comprend en outre :
un circuit thermique de batterie (40) comprenant une pompe pour faire circuler un agent de refroidissement de batterie entre une section thermique de batterie (44) pour le conditionnement thermique de l'unité de batterie et un échangeur de chaleur de batterie (42), dans lequel l'échangeur de chaleur de batterie (42) est un échangeur de chaleur liquide-liquide disposé entre le circuit thermique de batterie (40) et le circuit thermique de pile à combustible (20) pour échanger de la chaleur entre l'agent de refroidissement de batterie et l'agent de refroidissement de pile à combustible.

3. Véhicule à pile à combustible selon la revendication 1 ou 2, dans lequel le circuit thermique (100) comprend en outre :
un circuit de refroidissement de réfrigérant (50) comprenant un compresseur pour faire circuler un fluide réfrigérant entre un moyen de condenseur (58) pour condenser le fluide réfrigérant et au moins un moyen de détente (59) pour détendre le fluide réfrigérant, ledit au moins un moyen de détente (59) étant relié thermiquement à au moins un échangeur de chaleur de réfrigérant (52, 54, 55) comprenant :
un premier échangeur de chaleur de réfrigérant (55), qui est un échangeur de chaleur liquide-air, disposé entre le circuit de refroidissement de réfrigérant (50) et une cabine du véhicule à pile à combustible, pour échanger de la chaleur entre le fluide réfrigérant et l'air de la cabine.

4. Véhicule à pile à combustible selon la revendication 3, dans lequel ledit au moins un échangeur de chaleur de réfrigérant (52, 54, 55) comprend en outre :
un deuxième échangeur de chaleur de réfrigérant (52) qui est un échangeur de chaleur liquide-liquide et qui est disposé entre le circuit de refroidissement de réfrigérant (50) et le circuit de chaleur de pile à combustible (20) pour échanger de la chaleur entre le fluide réfrigérant et le réfrigérant de pile à combustible ;
et/ou
un troisième échangeur de chaleur de réfrigérant (54), qui est un échangeur de chaleur liquide-liquide et qui est disposé entre le circuit de refroidissement de réfrigérant (50) et le circuit de chaleur de batterie (40), pour échanger de la chaleur entre le réfrigérant et le liquide de refroidissement de batterie.

5. Véhicule à pile à combustible selon la revendication 3 ou 4, dans lequel le moyen de condenseur (58) est thermiquement connecté à un échangeur de chaleur de condenseur (51) qui est un échangeur de chaleur liquide-liquide disposé entre le moyen de condenseur (58) et le circuit de chaleur ambiante (10) pour échanger de la chaleur entre le fluide de refroidissement et le réfrigérant ambiant.

6. Véhicule à pile à combustible selon la revendication 3 ou 4, dans lequel le moyen de condenseur (58) est relié thermiquement à un échangeur de chaleur de condenseur (56), qui est un échangeur de chaleur liquide-air, disposé entre le moyen de condenseur (58) et l'air ambiant pour échanger de la chaleur entre le réfrigérant et l'air ambiant.

7. Véhicule à pile à combustible selon l'une des revendications précédentes, dans lequel le circuit de chaleur ambiante (10), le circuit de chaleur de pile à combustible (20) et/ou le circuit de chaleur de propulsion (30) comportent une dérivation et une vanne de dérivation pour contourner l'échangeur de chaleur ambiante (11), l'échangeur thermique de pile à combustible (21) et/ou l'échangeur thermique d'entraînement (31), le circuit thermique de batterie (40) comprenant une vanne de commutation pour commuter un flux soit vers l'échangeur thermique de batterie (42) soit vers le troisième échangeur thermique de réfrigérant (54).

8. Véhicule à pile à combustible selon l'une des revendications précédentes, dans lequel le circuit thermique (20) de la pile à combustible comprend un dispositif de chauffage PTC (23) pour chauffer le fluide de refroidissement de la pile à combustible.

9. Véhicule à pile à combustible selon la revendication 7 ou 8, comprenant en outre une unité de commande connectée pour commander chacune des pompes, le compresseur et les vannes de dérivation dans le circuit thermique de pile à combustible (20), le circuit thermique de propulsion (30), le circuit thermique ambiant (10), le circuit thermique de batterie (40) et/ou le circuit de refroidissement de réfrigérant (50) ; dans lequel
l'unité de commande est configurée pour commander une circulation du fluide de refroidissement de pile à combustible, du fluide de refroidissement d'entraînement, du fluide de refroidissement ambiant, du fluide de refroidissement de batterie et du fluide de refroidissement en ajustant chacune des pompes, du compresseur et des vannes de dérivation.

10. Procédé de gestion thermique dans un véhicule à pile à combustible selon l'une quelconque des revendications 1 à 9, le procédé fournissant un mode de fonctionnement à froid pour un état de démarrage à froid du véhicule à pile à combustible et/ou une température ambiante froide, comprenant les étapes consistant à :
faire circuler le fluide de refroidissement de la pile à combustible à travers l'échangeur de chaleur (21) de la pile à combustible dans le circuit thermique de la pile à combustible (20) ;
faire circuler le fluide de refroidissement de la chaleur d'entraînement pour le faire passer à travers l'échangeur de chaleur d'entraînement (31) dans le circuit de chaleur d'entraînement (30) ; et éventuellement
faire circuler le liquide de refroidissement de la batterie pour le faire passer à travers l'échangeur de chaleur de la batterie (42) ; et
faire circuler le liquide de refroidissement ambiant en contournant l'échangeur de chaleur ambiant (11) dans le circuit de chaleur ambiant (10) ;

11. **Procédé** de gestion thermique dans un véhicule à pile à selon l'une quelconque des revendications 1 à 9, le procédé fournissant un mode de fonctionnement normal pour des conditions de conduite normales du véhicule à pile à combustible, comprenant, dans le mode de fonctionnement normal, les étapes suivantes :
faire circuler le liquide de refroidissement de la pile à combustible pour le faire passer à travers l'échangeur de chaleur de la pile à combustible (21) dans le circuit de chaleur de la pile à combustible (20) ; et
faire circuler le liquide de refroidissement de l'entraînement pour le faire passer à travers l'échangeur de chaleur de l'entraînement (31) dans le circuit de chaleur de l'entraînement (30) ; et éventuellement
faire circuler le liquide de refroidissement de la batterie pour le faire passer à travers l'échangeur de chaleur de la batterie (42) dans le circuit de chaleur de la batterie (40) ; et
faire circuler le liquide de refroidissement ambiant pour le faire passer à travers l'échangeur de chaleur ambiant (11) dans le circuit de chaleur ambiant (10) ;
pour évacuer la chaleur dégagée par la pile à combustible et l'unité de puissance et/ou la batterie vers l'air ambiant via le circuit de chaleur ambiante (10).

12. Procédé de gestion thermique dans un véhicule à pile à combustible selon l'une quelconque des revendications 1 à 9, le procédé prévoyant un mode de fonctionnement à forte charge pour l'état de conduite en montée du véhicule à pile à combustible et/ou des températures ambiantes chaudes, comprenant les étapes suivantes :
faire circuler le fluide frigorigène pour le faire passer à travers ledit au moins un moyen d'expansion (59) relié thermiquement audit deuxième échangeur de chaleur de fluide frigorigène (52) dans ladite boucle de refroidissement de fluide frigorigène (50) ; et/ou
faire circuler le réfrigérant pour le faire passer à travers ledit au moins un moyen d'expansion (59) relié thermiquement audit troisième échangeur de chaleur de réfrigérant (54) dans ladite boucle de refroidissement de réfrigérant (50) ;
pour une dissipation supplémentaire de la chaleur dégagée par la pile à combustible et l'unité de puissance et/ou la batterie à travers le circuit de refroidissement de réfrigérant (50), au moins pendant une période limitée.

13. Procédé de gestion thermique dans un véhicule à pile à combustible selon l'une quelconque des revendications 1 à 9, le procédé fournissant un mode de fonctionnement de charge à froid pour charger la batterie dans un état stationnaire du véhicule à pile à combustible à une température de batterie froide, comprenant les étapes consistant à :
faire circuler le liquide de refroidissement de la pile à combustible pour le faire passer à travers l'échangeur de chaleur de la pile à combustible (21) dans le circuit de chaleur de la pile à combustible (20) ; et
faire circuler le liquide de refroidissement de la pile pour le faire passer à travers l'échangeur de chaleur de la pile (42) dans le circuit thermique de la pile (40) ;
pour chauffer le circuit thermique de la batterie (40) par la chaleur dégagée par la pile à combustible et/ou le dispositif de chauffage PTC (23).

14. Véhicule à pile à combustible selon la revendication 9, dans lequel l'unité de commande fournit en outre un mode de fonctionnement de charge à chaud pour charger la batterie à l'état stationnaire du véhicule à pile à combustible à une température de batterie chaude, comprenant les étapes suivantes :
empêcher la circulation du réfrigérant de la batterie à travers l'échangeur de chaleur de la batterie (42) dans la boucle de chaleur de la batterie (40) au moyen d'une vanne de dérivation dans la boucle de chaleur de la batterie (40) ; et
faire circuler le réfrigérant pour le faire passer à travers le au moins un moyen d'expansion (59) relié thermiquement au troisième échangeur de chaleur de réfrigérant (54) dans la boucle de refroidissement de réfrigérant (50) ;
pour évacuer la chaleur libérée par le processus de charge de la batterie à travers la boucle de refroidissement (50).

15. Véhicule à pile à combustible selon l'une des revendications 1 à 9, **caractérisé en ce que** l'échangeur de chaleur à air ambiant (11) est le seul dispositif de refroidissement exposé à l'intérieur d'une zone de résistance à l'air du véhicule à pile à combustible.
